# EUROPEAN PATENT APPLICATION

(11) **EP 3 279 069 A1**
(43) Date of publication of application: **07.02.2018**
(21) Application number: 17156232.5
(22) Date of filing: 15.02.2017
(51) Int. Cl.: B62K 11/00

(54) **PERSONAL VEHICLE**

(30) Priority: 03.08.2016 US 201662370353 P
(71) Applicant: Radical Transport, LLC, Dallas, TX 75220 (US)
(72) Inventor: CUBAN, Mark, Dallas, TX 75220 (US); FRAGNITO, Nicholas, Dallas, TX 75204 (US); WILLIAMS Jr., Evan, Zionsville, IN 46077 (US)
(74) Representative: Conroy, John

(57) **Abstract**

A two-wheeled electric vehicle that can be used for personal transportation is provided. In some embodiments, the vehicle includes first and second wheels defining a common longitudinal axis of rotation, a rigid platform between the first and second wheels including a unitary upper deck that defines the left and right foot portions, and a carrying handle that spans a center of the rigid platform.

## Description

### TECHNICAL FIELD

This document describes personal transportation devices, systems, and methods, and in some embodiments, two-wheeled, personal transportation vehicles having a carrying handle.

### BACKGROUND

Powered vehicles for personal transportation are widely known. Wheeled vehicles have been proposed that deliver power to move a vehicle and user. Some devices deliver torque to the wheels based on input provided by a user. For example, speed and direction of some wheeled vehicles may be controlled based on the distribution of a user's weight, while a controller system controls delivery of power to the wheels to stabilize the vehicle. Many such vehicles include platforms for each foot of a user that are independently articulated to generate control inputs.

### SUMMARY

In general, this document describes devices, systems, and methods for personal transportation. Exemplary personal transportation vehicles may deliver power to one or more wheels to drive the vehicle while carrying one or more riders. Optionally, the vehicle may be an electric vehicle having a centrally located carrying handle on a deck of the vehicle. A user may grip the handle to carry or physically manipulate the vehicle. Such devices may enhance manual maneuverability and handling of the vehicle between periods of operation, for example.

Some exemplary embodiments described herein provide a two-wheeled electric vehicle including first and second wheels defining a common longitudinal axis of rotation, a rigid platform between the first and second wheels including left and right foot portions, and a carrying handle that spans a center of the rigid platform.

Implementations may include any, all, or none of the following features. The carrying handle may include an opening defined through the rigid platform. A mid-sagittal reference plane may divide the rigid deck into left and right halves, and the mid-sagittal reference plane may intersect the opening. The longitudinal axis of rotation may intersect the opening. The carrying handle may include left and right portions, and the left and right portions may be in fixed relation relative to each other. The carrying handle may be defined at least in part by a convex surface extending upwardly from a lower deck. The convex surface may be integrally formed with the lower deck as a unitary component. The opening may have a width (w_{opening}) measured across the opening in a direction perpendicular to the longitudinal axis of rotation, and the rigid platform may have a width (W_{platform}) between front and rear edges of the rigid platform, and 0.1*(W_{platform}) < (w_{opening}) < 0.75*(W_{platform}). The carrying handle may include first and second grippable portions on opposite sides of the opening and spaced from the longitudinal axis of rotation such that the longitudinal axis of rotation does not intersect the first and second grippable portions. The carrying handle may be free of movable parts. The rigid platform may include a unitary upper deck that defines the left and right foot portions. The upper deck may include upwardly curved end regions at opposite ends. The upper deck may have an exposed upper surface, and the upper surface may be at least partially below the longitudinal axis of rotation. The vehicle may include a first motor configured to deliver torque to the first wheel and a second motor configured to deliver torque to the second wheel, the first and second motors may include first and second motor shafts coaxial with the longitudinal axis of rotation. First and second fenders may at least partially surround the first and second wheels. The fenders may be removably assembled to the rigid platform by frictional engagement and configured to separate upon an impact to the fender having a predetermined magnitude. The vehicle may include a control system and a sensor, the control system configured to deliver a control signal to an electric motor based on a sensor signal received from a sensor on the rigid platform, and the sensor may include a strain gauge. The strain gauge may be intersected by a mid-sagittal reference plane that divides the rigid platform into left and right halves. The controller may be configured to generate a control signal for driving an electric motor that is proportional to a weight supported by the rigid platform. The first and second wheels may each include a wheel well, and the rigid platform may extend at least partially within the wheel wells. The motor may be positioned entirely within the wheel well.

Some embodiments described herein provide a two-wheeled electric vehicle including first and second wheels defining a common longitudinal axis of rotation, a rigid platform between the first and second wheels, the rigid platform including a unitary upper deck defining left and right foot portions, and a carrying handle that spans a center of the rigid platform, the carrying handle including first and second portions on each side of a mid-sagittal reference plane, the mid-sagittal reference plane perpendicular to the longitudinal axis of rotation and dividing the rigid platform into left and right halves. The left and right portions of the carrying handle are in fixed relation to each other, and the carrying handle may include an opening extending through the rigid platform.

Implementations may include any, all, or none of the following features. The longitudinal axis of rotation may intersect the opening. The rigid platform includes a lower deck having an exposed major surface opposite the left and right foot portions of the upper deck, the carrying handle defined at least in part by a convex surface extending upwardly from a lower deck. The convex surface may be integrally formed with the lower deck as a unitary component. The opening may have a width (w_{opening}) measured across the opening in a direction perpendicular to the longitudinal axis of rotation, and the rigid platform may have a width (W_{platform}) between front and rear edges of the rigid platform, and 0.1*(W_{platform}) < (w_{opening}) < 0.75*(W_{platform}). The carrying handle may include first and second grippable portions on opposite sides of the opening and spaced from the longitudinal axis of rotation such that the longitudinal axis of rotation does not intersect the first and second grippable portions. The carrying handle may be free of movable parts.

Some embodiments described herein provide a two-wheeled vehicle including a rigid platform having a major upper surface defining first and second foot portions, first and second wheels defining a common longitudinal axis of rotation, and means for carrying the vehicle in an orientation in which the longitudinal axis of rotation is perpendicular to a force of gravity and the major upper surface is parallel to the force of gravity.

Some embodiments described herein provide a two-wheeled vehicle including a rigid platform having a major upper surface defining first and second foot portions, first and second wheels defining a common longitudinal axis of rotation, and first and second fenders at least partially surrounding the first and second wheels. The first and second fenders may be frictionally secured with the rigid platform and configured to separate without breaking upon an impact force above a predetermined threshold.

These and other embodiments described herein may provide one or more of the following benefits. First, some embodiments of an exemplary two-wheeled vehicle allow ergonomic handling and carrying of the vehicle between periods of operation. A centrally-positioned carrying handle can be constructed such that the vehicle may be carried in a substantially balanced orientation (e.g. such that a longitudinal axis of rotation is parallel to the ground).

Second, a carrying handle comprising an opening extending centrally through a rigid platform of the vehicle may provide a readily accessible carrying location without substantially interfering with the user during operation of the vehicle, and a user may view the ground below the vehicle through the opening of the carrying handle during operation of the vehicle.

Third, the vehicle can be constructed such that one or more components are readily interchangeable and/or replaceable. Interchangeable or replaceable components provide a configurable vehicle that may be modified to suit a particular user's preferences. The user may customize the vehicle for desired aesthetic or performance characteristics, or to replace a component that may be worn or damaged (e.g. instead of replacing the entire vehicle). Similarly, the vehicle may be provided with one or more interchangeable components that differ in one or more characteristics and that can be removed or installed over the life of the vehicle.

Fourth, in some exemplary embodiments, one or more components may be assembled to provide a robust and durable vehicle. For example, one or more components may be frictionally engaged and/or separated when subjected to an impact force greater than a predetermined threshold. One or more components of the vehicle may separate from one another upon an impact with an external object in the environment (e.g. instead of breaking), and may be readily reassembled or replaced. Damage to one or more components of the vehicle may be reduced, and the durability and longevity of the vehicle improved.

The details of one or more embodiments are set forth in the accompanying drawings and the description below. Other features and advantages will be apparent from the description and drawings, and from the claims.

### DESCRIPTION OF THE DRAWINGS

The details of one or more embodiments are set forth in the accompanying drawings and the description below, and wherein:
FIG. 1 is a perspective view of an exemplary vehicle.
FIG. 2 is an exemplary vehicle in operation supporting a standing user.
FIG. 3 is a front view of the exemplary vehicle of FIG. 1.
FIG. 4 is a top view of the exemplary vehicle of FIG. 1.
FIG. 5 is the exemplary vehicle of FIG. 1 carried by a user via a carrying handle.
FIG. 6 is an exploded view of the exemplary vehicle of FIG. 1.
FIG. 7 is a cross-sectional view of the exemplary vehicle of FIG. 1 along a longitudinal axis of rotation of first and second wheels.
FIG. 8 is a partial bottom view of the exemplary vehicle of FIG. 1, including components of an exemplary control system.
FIG. 9 is an exemplary control system circuit that may be included in the exemplary vehicle of FIG. 1.

### DETAILED DESCRIPTION OF ILLUSTRATIVE EMBODIMENTS

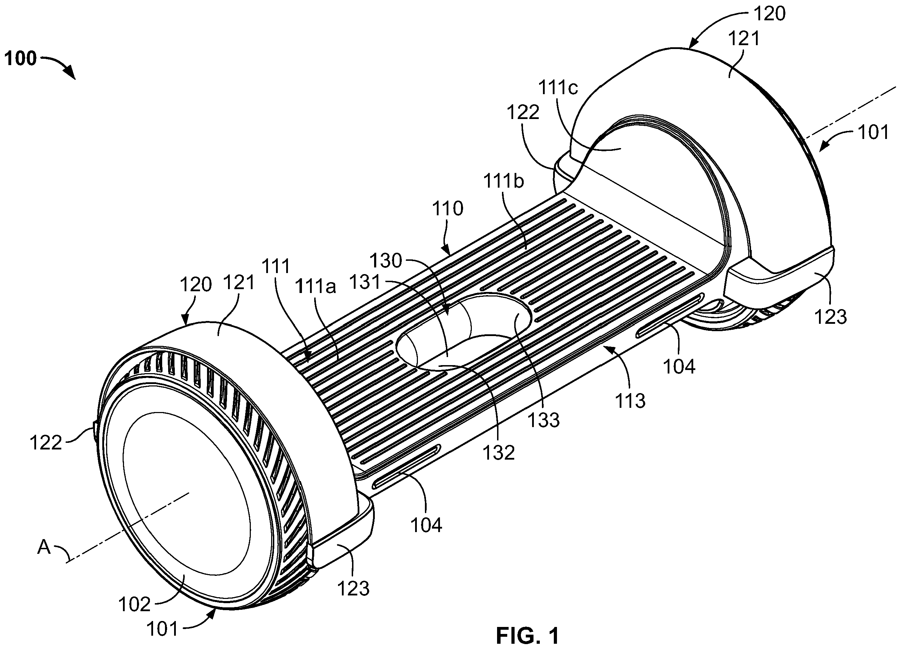

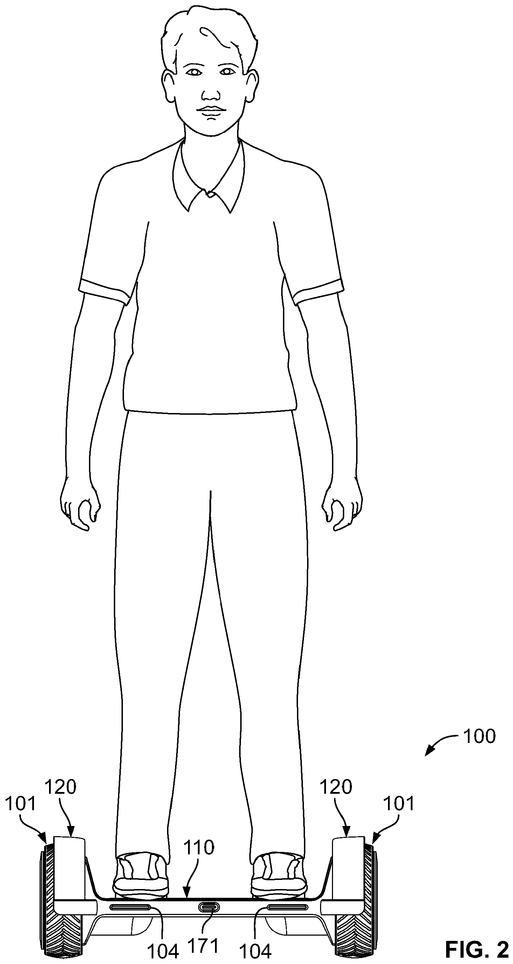

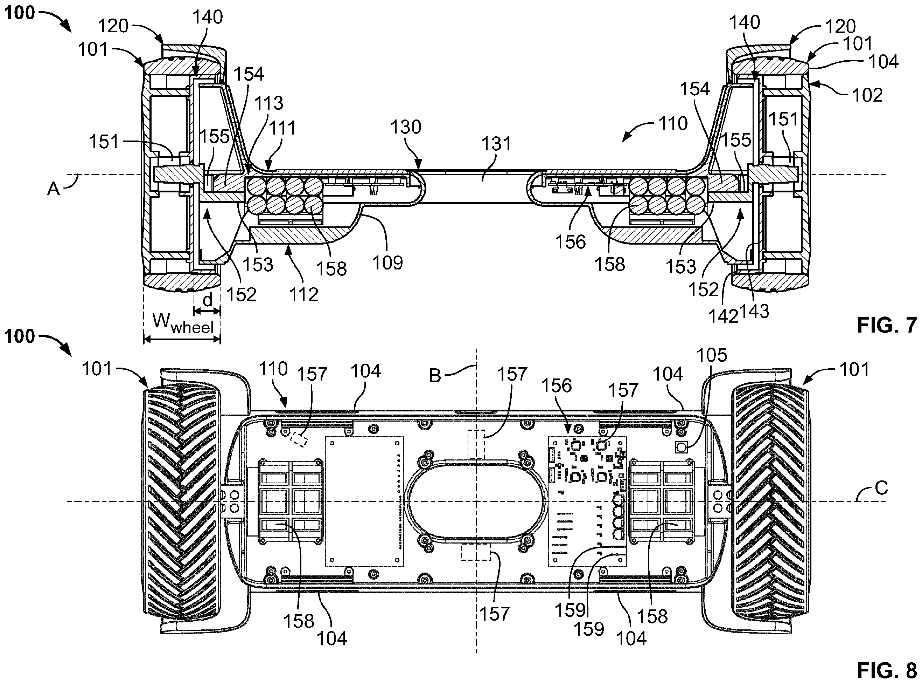

Referring to FIGS. 1-4, an exemplary two-wheeled vehicle 100 is shown, including first and second wheels 101, a rigid platform 110 between first and second wheels 101 and a fender system 120. A drive system 150 (FIG. 7) generates and controls delivery of power to first and second wheels 101 to drive vehicle 100. In operation, rigid platform 110 may support a user while one or more actuators, such as electric motors, deliver power to first and second wheels 101 to transport vehicle 100 and the user.

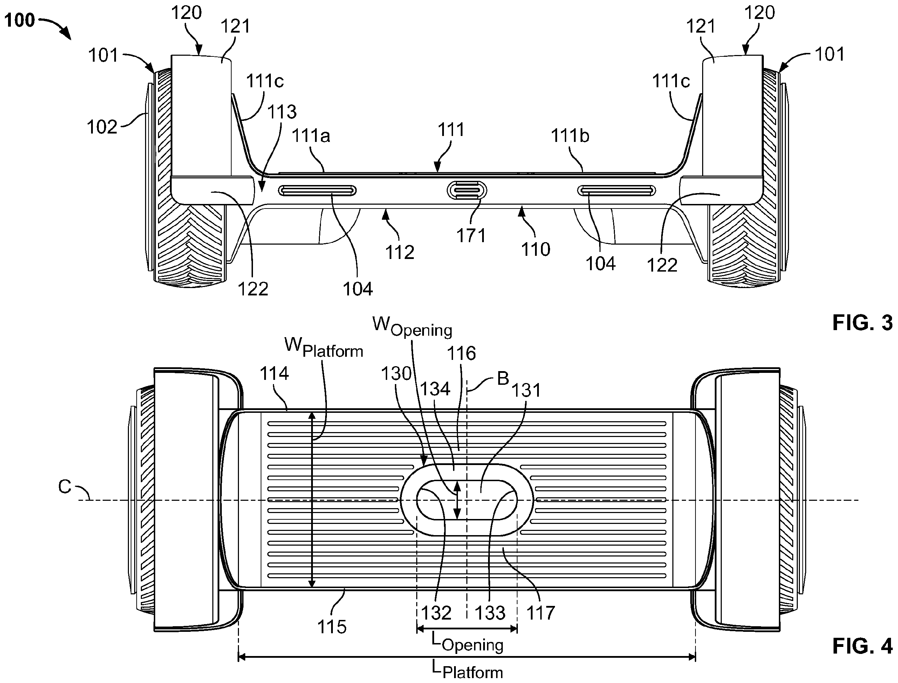

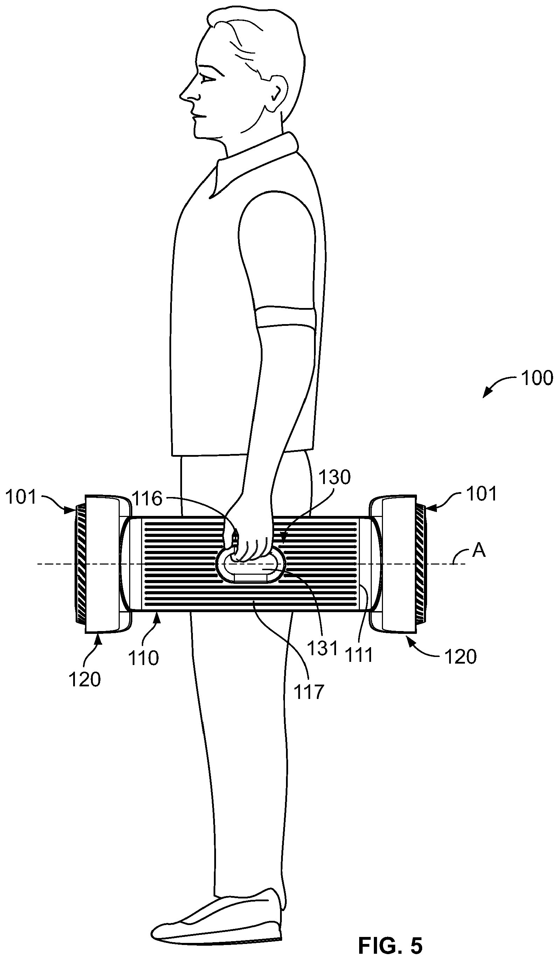

Rigid platform 110 is mounted, directly or indirectly, to first and second wheels 101 and extends at least partially between first and second wheels 101. Rigid platform 110 may include an upper deck 111 (e.g. that a user may stand on while riding vehicle 100), a lower deck 112 (FIG. 3), and frame 113. For example, upper deck 111 includes a first, or left, foot portion 111a where a user may position their left foot, and a second, or right, foot portion 111b where a user may position their right foot. First foot portion 111a is proximate a first wheel 101 and a first actuator 151 (FIG. 5) and right foot portion 111b is proximate a second wheel 101 and a second actuator 151.

Upper deck 111 may include curved ends 111c that curve upward from first and second foot portions 111a, 111b. In an exemplary embodiment, curved ends 111c and first and second foot portions 111a, 111b form a unitary upper deck 111. Curved ends 111c may provide a barrier between a user's feet, wheels 101, and/or one or more components housed within vehicle 100, while facilitating a streamlined aesthetic appearance of vehicle 100.

In an exemplary embodiment, upper deck 111 is substantially rigid such that first and second foot portions 111a, 111b are in fixed relation to each other. For example, first foot portion 111a may be connected to the second foot portion 111b, or supported by a common component, directly or indirectly, such that first and second foot portions 111a, 111b are substantially constrained from independent movement during operation of vehicle 100. First and second foot portions 111a, 111b may be constrained from independent rotation that would otherwise allow first and second foot portions 111a, 111b to articulate to different, discrete orientations relative to one another. In an exemplary embodiment, first and second foot portions 111a, 111b are provided at least in part by unitary upper deck 111, which spans a center of vehicle 100 and extends substantially from an end of rigid platform 110 proximate the first wheel 101 to an opposite end of rigid platform 110 proximate the second wheel 101. Unitary upper deck 111 may be supported by a unitary frame 113 that spans a center of vehicle 100 and spans first and second foot portions 111a, 111b.

Vehicle 100 includes a fender system 120 having one or more components that at least partially surround first and second wheels 101, rigid platform 110, and/or other components of vehicle 100. Fender system 120 may protect vehicle 100 from impact and interference with objects in the external environment by deflecting and/or dissipating the force of an impact. For example, fender system 120 can be constructed as the outermost portion of vehicle 100 (e.g. at particular locations of a front and rear of vehicle 100) such that, in the event of an impact with an object during operation, fender system 120 makes initial contact with the object. Fender system 120 may absorb or dissipate the force of impact to reduce the occurrence or severity of damage to vehicle 100.

Fender system 120 may include first and second fenders 121 that at least partially surround first and second wheels 101, respectively. First and second fenders 121 may cover at least an inner, upper portion of each wheel 101, providing a barrier between wheels 101 and a user's feet and legs supported on rigid platform 110. Alternatively or in addition, first and second fenders 121 may be positioned directly adjacent to rigid platform 110 to promote a continuous and streamlined visual appearance. Fender system 120 may include first and second front bumpers 122 and first and second rear bumpers 123. Front and rear bumpers 122, 123 may provide the outermost portion of fender system 120 at front and rear locations of vehicle 100 such that impact between an obstacle and vehicle 100 during operation may result in contact at a location of front or rear bumpers 122, 123.

In various exemplary embodiments, fender system 120 is configured to reduce damage or shock from an impact between vehicle 100 and an obstacle. Fender system 120, including fenders 121, front bumpers 122, and/or and rear bumpers 123 may be constructed of a durable and impact resistant material, and/or may have a geometry such that fender system 120 may flex or otherwise diffuse force over a relatively larger area. For example, fender system 120 may include components made from a resilient polymer material, steel, aluminum, magnesium, carbon fiber, combinations thereof, or other material suitable to absorb impact during operation of vehicle 100.

Vehicle 100 includes a carrying handle 130 that facilitates manual handling and manipulation of vehicle 100. In an exemplary embodiment, carrying handle 130 provides a location where a user may grasp vehicle 100 to lift vehicle 100 off the ground and manually carry vehicle 100. For example, a user may grasp carrying handle 130 to pick-up vehicle 100 from the ground and manually transport vehicle 100 between periods of operation when power is not delivered to the wheels, or to reposition vehicle 100.

Carrying handle 130 may be positioned generally centrally on rigid platform 110 such that at least a portion of carrying handle 130 is positioned forward of a longitudinal axis of rotation (A) extending through the axis of rotation of first and second wheels 101, and at least a portion of carrying handle 130 is positioned rearward of longitudinal axis of rotation (A). Alternatively or in addition, carrying handle 130 may be positioned generally centrally between first and second wheels 101 such that at least a portion of carrying handle 130 is on a left half of vehicle 100 and at least a portion of carrying handle 130 is on a right half of vehicle 100.

Various features of vehicle 100 and carrying handle 130 may be further understood in view of two reference planes defined relative to vehicle 100 and shown in FIG. 4. A mid-sagittal reference plane (B) divides vehicle 100 into imaginary left and right halves and a mid-frontal reference plane (C) divides vehicle 100 into imaginary front and rear halves. In an exemplary embodiment, carrying handle 130 is positioned such that mid-sagittal reference plane (B) and mid-frontal reference plane (C) each intersect a portion of carrying handle 130. That is, carrying handle 130 may span each of mid-sagittal reference plane (B) and mid-frontal reference plane (C) such that a portions of carrying handle are present both to the left and to the right of mid-sagittal reference plane (B), and to the front and to the rear of mid-frontal reference plane (C).

Carrying handle 130 may include left and right portions 132, 133 (e.g. on each side of a mid-sagittal reference plane (B), or left and right halves of carrying handle 130 in embodiments in which carrying handle 130 is positioned symmetrically about mid-sagittal reference plane (B)), that are in fixed relation to one another. That is, rigid platform 110 may be constructed such that carrying handle 130 includes left and right portions 132, 133 that do not substantially rotate or otherwise move relative to each other during operation of vehicle 100, and do not substantially rotate or otherwise move relative to each other while vehicle 100 is handled by a user via carrying handle 130. Left and right portions may be defined by a unitary upper deck 111, unitary lower deck 112, and/or unitary frame 113 that span a center where mid-sagittal reference plane (B) extends through vehicle 100. Carrying handle 130 having left and right portions 132, 133 that are in fixed relation to each other facilitates carrying by providing a consistent grip, and reducing moving parts, joints, or seams that could be perceived by the user while carrying vehicle 100.

Carrying handle 130 may be defined at least in part by one or more surfaces of vehicle 100. In an exemplary embodiment, carrying handle 130 includes opening 131 defined at least partially through rigid platform 110. Opening 131 may extend entirely through rigid platform 110 such that the ground below vehicle 100 is visible through opening 131 from above vehicle 100 (e.g. by a user during operation of vehicle 100). Upper deck 111, lower deck 112, frame 113, and/or other components of rigid platform 110 may contribute sufficient structural support such that opening 131 can be used to carry vehicle 100. Alternatively or in addition, carrying handle 131 may be provided by upper deck 111, lower deck 112, frame 113, or other portions of vehicle 100, and/or may include a separate component attached to vehicle 100.

Opening 131 of carrying handle 130 may have curved inner walls and/or chamfered edges that facilitate a comfortable grip substantially free of corners, movable parts, or sharp edges. For example, opening 131 is defined in part by inner surfaces 134 having an outwardly convex curvature that provides an ergonomic profile. In an exemplary embodiment, inner surfaces 134 are formed by a portion of lower deck 112 extending upwardly through frame 113 towards upper deck 111. Alternatively or in addition, one or more surfaces of handle 130 may be textured, rubberized, and/or include ridges or indents to facilitate finger placement by a user.

Carrying handle 130, and particularly opening 131, may have a shape configured to receive a portion of a user's hand while carrying vehicle 100. In an exemplary embodiment, opening 131 has an oval shape including straight, elongate side portions and curved ends. Alternatively or in addition, carrying handle 130 may exhibit one or more shapes including circular, elliptical, square, rectangular, other shapes, or combinations thereof, that facilitate handling by a user and/or facilitate balanced carrying of vehicle 100.

Carrying handle 130 exhibits a size suitable for carrying vehicle 100 without unduly affecting the structural integrity or stability of rigid platform 110. In an exemplary embodiment in which carrying handle 130 is at least partially formed as an opening through rigid platform 110, carrying handle 130 has a width (w_{opening}) measured across opening 131 in a direction perpendicular to longitudinal axis of rotation (A), and a length (l_{opening}) measured across opening 131 in a direction parallel to longitudinal axis of rotation (A). Rigid platform 110 has a width (W_{platform}) measured between front and rear edges 114, 115 in a direction perpendicular to the longitudinal axis of rotation, and a length (L_{platform}) measured between opposite ends 116, 117 of rigid platform 110 between first and second wheels 101. In various exemplary embodiments, width (w_{opening}) of carrying handle 130 is smaller than width (W_{platform}) of rigid platform 110, and width (w_{opening}) may be between about 0.1*(W_{platform}) and 0.9*(W_{platform}), 0.15*(W_{platform}) and 0.6*(W_{platform}), or about 0.25*(W_{platform}). Length (1) of carrying handle 130 is smaller than length (L_{platform}) of rigid platform 110, and length (1) may be between about 0.1*(L_{platform}) and 0.7*(L), 0.15*(L_{platform}) and 0.4*(L_{platform}), or about 0.2*(L_{platform}). Such dimensions facilitate carrying of vehicle 100 without carrying handle 130 being so large as to be perceived to interfere with a user's feet during operation of vehicle 100 or unduly affecting the structural integrity or stability of rigid platform 110. In some exemplary embodiments, such dimensions provide first and second grippable portions 116, 117 of rigid platform 110. For example, a first grippable portion 116 is positioned between front edge 114 and opening 131 of carrying handle 130, and a second grippable portion 117 is positioned between rear edge 115 and opening 131 of carrying handle 130. Accordingly, a user may carry vehicle 100 by gripping either portion, and vehicle 100 may be carried in a configuration in which front edge 114 faces upwards away from the ground or in a configuration in which front edge 114 faces downwards towards the ground.

Referring to FIG. 5, carrying handle 130 may facilitate comfortable carrying of vehicle 100 by a user. For example, carrying handle 130 positioned centrally between wheels 101 may result in substantially even distribution of weight on each side of carrying handle 130 when vehicle 100 is carried via carrying handle 130, and may facilitate one-handed carrying of vehicle 100. A user can readily pick-up and carry vehicle 100 via carrying handle 130, and longitudinal axis of rotation (A) between first and second wheels 101 may remain substantially perpendicular to the force of gravity. Alternatively or in addition, carrying handle 130 may provide a location of vehicle 100 that is above longitudinal axis of rotation (A) when vehicle 100 is carried by the user. For example, first grippable portion 116 may be positioned above longitudinal axis (A), and second grippable portion 117 may be positioned below longitudinal axis (A), when vehicle 100 is carried by a user via first grippable portion 116 of carrying handle 130. Vehicle 100 may be carried via carrying handle 130 such that an exposed surface of upper deck 111 is oriented substantially perpendicular to the ground. Longitudinal axis of rotation (A) may extend below the location where a user grips carrying handle 130, for example through opening 131 below the user's hand. In this way, vehicle 100 may have a center of gravity that is below the location where the user grips carrying handle 130 to carry vehicle 100. Carrying handle 130 thus may be gripped to hold vehicle 100 in an orientation in which vehicle 100 remains stable in the user's hand, and require little balance or support by the user to prevent vehicle 100 from twisting out of the user's hand.

In some exemplary embodiments, carrying handle 130 may include a centrally located grippable arm or bar with openings defined forward and reward of the arm to accommodate a user's hand and facilitate gripping of the arm. An arm may be aligned substantially parallel with the mid-frontal reference plane (B) extending across opening 131 and longitudinal axis of rotation (A). For example, the arm may separate opening 131 into front and rear openings through rigid platform 110 that are positioned forward and reward of the arm and/or mid-frontal reference plane (B), respectively, and that accommodate a user's hand when the user grips the arm to carry vehicle 100.

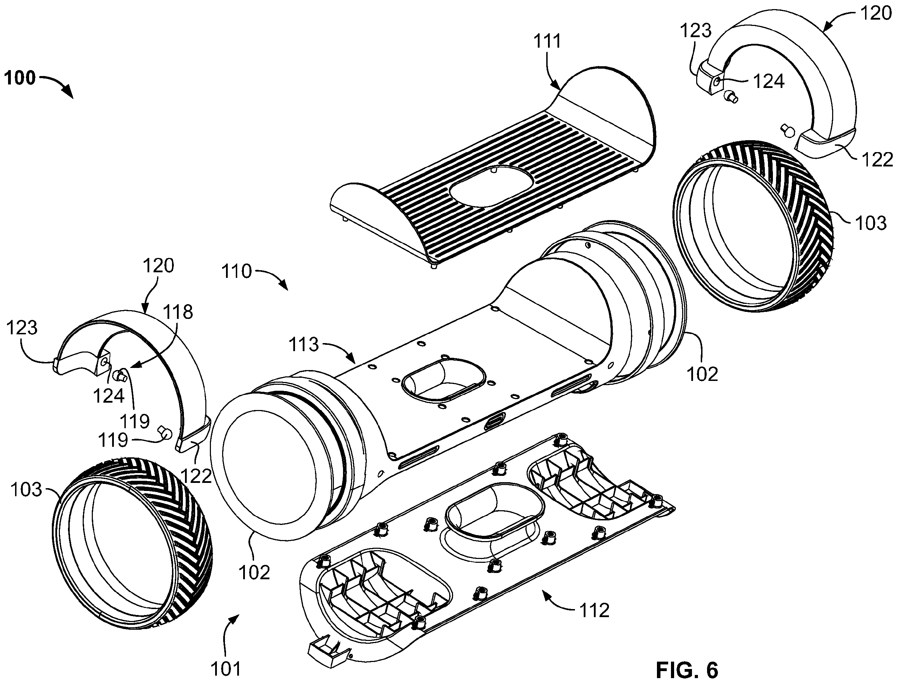

Referring to FIG. 6, an exploded perspective view of vehicle 100 is shown. Fender system 120, including fenders 121 and bumpers 122, 123, may be removably assembled with each other, rigid platform 110, and/or other components of vehicle 100 (e.g. and may be removed and reassembled without damage to fender system 120 and other components of vehicle 100). For example, fender system 120 may be configured to separate into multiple components when subjected to an impact of a predetermined threshold such that the force of an impact is at least partially diffused. A force sustained during an impact between vehicle 100 and an object may be at least partially diffused by redirecting the force of impact towards causing components of fender system 120 to separate from one another and/or vehicle 100. Damage to fender system 120 and/or other components of vehicle 100 may thus be reduced, and the separated components may be readily reassembled or replaced with substitute components.

Components of fender system 120 may be releasably coupled with rigid platform 110 by frictional engagement. In an exemplary embodiment, vehicle 100 includes ball-and-socket connections that provide frictional engagement between fender system 120 and rigid platform 110. For example, ball-end 119 of a ball screw 118 may extend from rigid platform 110, and a socket 124 defined by fender system 120 may frictionally receive ball-end 119. During normal operation, frictional engagement between ball-end 119 and socket 124 securely maintains fender system 120 with rigid platform 110. When subjected to an impact above a predetermined threshold (e.g. sufficient to overcome the frictional force between an outer surface of ball-end 119 and an inner surface of socket 124), ball-end 119 is forced from engagement with socket 124, and one or more components of fender system 120 and rigid platform 110 may separate. The energy from impact is thus at least partially redirected to overcoming the frictional force to remove ball-end 119 from socket 124. Damage to fender system 120, rigid platform 110, and/or other components of vehicle 100 may be reduced. Alternatively or in addition, rigid platform 110 may include one or more sockets 124 and fender system 120 may include one or more ball screws 118. Similarly, one or more components of fender system 120 may be releasably joined with other components of vehicle 100 by one or more ball-and-socket connectors, magnetic connectors, snap-fit connectors, connectors integrally formed with upper deck 111, lower deck 112, frame 113, and/or fender system 120, adhesive, hook and loop connectors, or combinations thereof, for example. One or more other components of vehicle 100 may be separable upon impact. Upper deck 111, lower deck 112, and frame 113 may be releasably attachable to at least partially define rigid platform 110, and may be separable to diffuse an impact or otherwise reduce the occurrence of damage to vehicle 100.

Components of vehicle 100 may be manually separable to interchange or replace various components. In an exemplary embodiment, upper deck 111, lower deck 112, frame 113, and/or fender system 120 may be interchangeable or otherwise replaceable. For example, upper deck 111 may be removed and substituted with a different upper deck 111. In this way, upper deck 111 may be readily replaced due to wear, damage, to provide desired performance characteristics for a user's riding style or skill level, or to provide desired aesthetic characteristics. One or more components of vehicle 100 may be interchangeable by a user to customize vehicle 100, including first and second wheels 101, hubs 102, fenders 121, front bumpers 122, rear bumpers 123, rigid platform 110, upper deck 111, lower deck 112, frame 113, and lights 104, for example. Components of vehicle 100 may be provided individually or as a kit, such as a kit including one or more components that differ in at least one characteristic. For example, a kit may include a set of the same components that differ in at least one of color, material, tread, shape, weight, stiffness, or other characteristic. Components of vehicle 100 may be secured by one or more threaded fasteners, magnetic fasteners, snap-fit fasteners, adhesive fasteners, and/or combinations thereof. One or more components may be disassembled by removing the fasteners and/or separating the components from engagement with one another, and reassembled by joining the fasteners and/or engaging the components with one another.

Alternatively or in addition, particular components of vehicle 100 may be integrally formed as a unitary component, such as upper deck 111, lower deck 112, and/or frame 113. For example, lower deck 112 may be integrally formed with frame 113, and/or upper deck 111 may be integrally formed with frame 113, as a unitary component. Similarly, front bumpers 122 and rear bumpers 123 may be integrally formed with fenders 121, respectively, and may together be separable from rigid platform 110, or may be permanently attached to rigid platform 110.

Referring still to FIG. 6, wheels 101 are configured to contact the ground supporting vehicle 100 and may include features and characteristics for driving vehicle 100 on a variety of surface types. In an exemplary embodiment, wheels 101 include a rubber or polymer tire 103 surrounding a hub 102. Tire 103 may be substantially solid, foam-filled, or gas-filled, for example, and a hardness may be selected to provide a desired balance of performance and durability while supporting the weight of vehicle 100 and a user operating vehicle 100. Ground contacting surfaces of tire 100 may include a tread pattern to provide a desired level of traction. Wheels 101, including hubs 102 and/or tires 103, having particular performance characteristics may be removed and replaced by alternate wheels 101, hubs 102, and/or tires 103, to customize vehicle 100 for particular terrain or as desired by a particular user.

Rigid platform 110 may be constructed from one or more materials having sufficient rigidity to support one or more users and/or components of vehicle 100. In an exemplary embodiment, frame 113 of rigid platform 110 is made from steel, aluminum, magnesium, plastic, carbon fiber, wood, or combinations thereof. Such materials can provide adequate structural strength to support a user during operation of vehicle 100, while vehicle 100 remains sufficiently low weight. A vehicle 100 having a relatively lower weight can improve efficiency and handling during operation of vehicle 100, and allow ready manipulation of vehicle 100, with one hand, for example, when not in operation. Upper deck 111, lower deck 112, and/or frame 113 may be unitary components that span the center of vehicle 100. Rigid platform 110 including one or more unitary components that span the center of vehicle 100 facilitates rigidity of vehicle 100 and reduces individual articulation of left and right portions of rigid platform 110 independent of each other.

Referring to FIG. 7, a cross-sectional view of vehicle 100 is shown, including internal cavities that provide a volume housing components of vehicle 100. Vehicle 100 may include a housing 109 defined at least in part by upper deck 111, lower deck 112, frame 113, and/or wheels 101. In an exemplary embodiment, housing 109 defines an interior volume that extends continuously on each side of carrying handle 130. Vehicle 100 may be constructed such that one or more components may be positioned within housing 109, between upper and lower decks 111, 112, for example.

Each wheel 101 may define an interior wheel well 140. For example, wheel well 140 defies a volume that extends between an interior edge 142 and inner wheel well wall 143 of wheel hub 102. Wheels 101 have a wheel width (W_{wheel}), and wheel well 140 has a depth (d) between interior edge 142 and wall 143. In various exemplary embodiments, wheel well depth (d) may be between 0.1*(W_{wheel}) and 0.5*(W_{wheel}), 0.15*(W_{wheel}) and 0.4*(W_{wheel}), or about 0.3*(W_{wheel}). Such ranges provide a wheel well 140 having a volume that can at least partially accommodate an actuator for driving vehicle 100, for example, without unduly affecting the structural integrity of wheels 101. Frame 113 and/or other portions of rigid platform 110 may be at least partially accommodated within wheel well 140, providing a streamlined aesthetic appearance and promoting stability of vehicle 100 during operation. That is, rigid platform 110 extends into each wheel well 140 such that rigid platform 110 and wheels 101 partially overlap (e.g. as viewed in the cross-section shown in FIG. 5).

Internal cavities of vehicle 100 house actuators that drive first and second wheels 101, respectively, to transport vehicle 100 and its payload. The actuators may include first and second electric motors 151 associated with each wheel 101, respectively. Motors 151 may be positioned in close proximity to each wheel 101 and efficiently deliver torque to wheels 101 based on control signals from controller 156. In an exemplary embodiment, wheel wells 140 are larger than first and second motors 151, and motors 151 are positioned substantially within wheel wells 140. Wheels 101 are connected to shafts of first and second electric motors 151, respectively, such that rotational power generated by motors 151 is transferred to wheels 101 to drive vehicle 100.

First and second motors 151 are securely mounted, directly or indirectly, to rigid platform 110. In an exemplary embodiment, motor mounts 152 connect rigid platform 110 with motors 151, and are hidden from external view of vehicle 100 within wheel well 140 and/or housing 109. For example, first and second motor mounts 152 may include an L-shaped bracket that connects rigid platform 110 with first and second motors 151. Motor mount 152 includes a lower portion 153 extending towards a center of rigid platform 110 in a direction substantially parallel with the shaft of motor 151 and longitudinal axis of rotation (A). Rigid platform 110 may include a complementary feature 154 that receives lower portion 153 of motor mount 152, and one or more threaded fasteners join motor mount 153 with rigid platform 110. Alternatively or in addition, motor mount 152 and rigid platform 110 may be joined with adhesive, snap-fit connectors, frictional engagement between motor mount 152 and rigid platform 110, or other fasteners, for example, that provide a secure connection between motor mount 152 and rigid platform 110.

First and second wheels 101 and rigid platform 110 may be constructed and positioned relative to one another to promote stability and desired handling for a user standing on rigid platform 110 during operation of vehicle 100. For example, rigid platform 110 may be positioned at least partially below the longitudinal axis of rotation (e.g. in a hanging configuration) such that gravitational forces acting on rigid platform 110 tend to urge rigid platform 110 towards a substantially level orientation. Motor mount 152 may be joined to rigid platform 110 such that at least a portion of rigid platform 110, and/or lower portion 153 of motor mount 152, for example, are positioned below longitudinal axis of rotation (A). In various exemplary embodiments, a major surface of upper deck 111 (e.g. where a user places their feet during operation of vehicle 100) is substantially aligned with the longitudinal axis of rotation, and a majority of rigid platform 110 is positioned below longitudinal axis of rotation (A). For example, the center of gravity of rigid platform 110 may be positioned at or below longitudinal axis of rotation (A) when vehicle 100 is at rest and rigid platform 110 is in a level orientation.

Motor mounts 152 may include an L-bracket having a lower portion 153 with an upper surface 155 that is positioned between 0 mm and 50 mm, 5 mm and 40 mm, or about 25 mm below the longitudinal axis of rotation. Such relative positioning of wheels 101 and rigid platform 110 may facilitate a desired level of stability and control of vehicle 100, and allow longitudinal axis of rotation (A) to pass through or near the plane of an upper major surface of upper deck 111.

Referring to FIGS. 7 and 8, drive system 150 of vehicle 100 includes a controller 156, sensors 157 that monitor conditions of vehicle 100, and actuators, such as electric motors 151, that drive vehicle 100 based at least in part on control signals received from controller 156. Controller 156 receives sensor signals from the one or more sensors 157 and processes the sensor signals to generate control signals to drive electric motors 151. Control signals may be generated according to a profile configured to maintain balance of rigid platform 110 and vehicle 100, such as to maintain rigid platform 110 in a substantially level orientation.

Controller 156 may include control logic that receives sensor signals from sensors 157 positioned at one or more locations of rigid platform 110, and may generate control signals to each wheel 101 in a coordinated manner. Similar torque may be delivered to first and second wheels 101 to drive vehicle 100 forward and backwards in a substantially straight direction, and torque may be varied between first and second wheels 101 (e.g. such that first and second wheels 101 rotate at different speeds) to turn vehicle 100. In other exemplary embodiments, first and second wheels 101 may be controlled by independent control logic of controller 156 based on independent sensor signals received from left and right portions of rigid platform 110, respectively.

Sensors 157 may be positioned to monitor conditions of vehicle 100. For example, sensors 157 may include an arrangement of one or more strain gauges configured to monitor a condition of rigid platform 110. Electrical resistance of the strain gauge changes as the rigid platform 110 is deformed, and the deflection or moment at the location of the strain gauge can be determined based on a voltage difference across two conductors of the strain gauge, for example. Sensors 157 may be positioned at multiple locations on rigid platform 110, and/or other portions of vehicle 100, to measure the deflection or moment at these locations. The signals from the strain gauges may be received by controller 156 and used by the control logic to drive electric motors 151.

Sensors 157 may be configured to detect the presence of a payload, such as a user, on rigid platform 100 due to the deflection or moment that may result from the weight of the payload. For example, controller 156 may detect the presence of a user when a threshold resistance or change in resistance is met. Upon detection of the presence of a user, controller 156 may generate a control signal to activate motors 151 and/or deliver power to motors 151 to maintain rigid platform in a balanced orientation (e.g. parallel to the ground). Similarly, when the user dismounts or the payload is removed, controller 156 may detect the absence of the user or payload based on a signal from sensors 157. Alternatively or in addition, sensor signals received by controller 156 from sensors 157 may allow controller 156 to determine the weight of a user or other payload supported by vehicle 100. The weight can be used by controller 156 in generating control signals for driving electric motors 151. For example, a higher magnitude of torque may be delivered by electric motors 151 when a relatively higher weight is detected, and a lower magnitude of torque may be delivered by electric motors 151 when a relatively lower weight is detected.

Sensors 157 may detect a moment or deflection at one or more locations of rigid platform 110 that is received by controller 156 to affect motion of vehicle 100 in forwards, backwards, and/or left and right directions. For example, controller 156 may generate control signals to drive wheels 100 based on a deflection or difference in deflection detected by sensors 157 at one or more locations of rigid platform 110. Deflection of rigid platform 110 about longitudinal axis of rotation (A), for example, may result in controller 156 generating power to wheels 151 to balance vehicle 100 and return rigid platform 110 to a neutral orientation. Similarly, controller 156 may determine a turning rate of vehicle 100 based in part on a difference in deflection between left and right portions of vehicle 100 measured by sensors 157. For example, a user may shift their weight to one side, or position one foot forward, for example, such that a difference in deflection between left and right portions of rigid platform 110 is detected by controller 156. Controller 156 may then generate control signals to electric motors 151 to turn one wheel 101 at a relatively higher rate than the other wheel 101 such that vehicle 100 turns. The rate of turn may be higher or lower based on the magnitude of the difference in deflection. For example, the difference in magnitude of torque applied to each wheel 101 may be based on the difference in deflection or moment detected between locations of sensors 157. In this way, a user can control the speed and direction of vehicle 100 by moving their weight or positioning their feet to apply an input force on rigid platform 110, while controller 156 delivers power to wheels 151 to attempt to maintain rigid platform 110 in a neutral configuration.

Sensors 157 may be positioned at various locations on rigid platform 110. In an exemplary embodiment, one or more sensors 157 are positioned centrally on rigid platform 110 (e.g. along mid-sagittal reference plane (B)). Alternatively or in addition, sensors 157 may be positioned on left and right portions of the mid-sagittal reference plan (B), and/or along longitudinal axis of rotation (A). In various exemplary embodiments in which sensors 157 includes an arrangement of strain gauges, the strain gauges may be fixed to rigid platform 110 in quarter Wheatstone bridge, half Wheatstone bridge, and/or full Wheatstone bridge configurations, for example. One or more strain gauges may be arranged parallel with the longitudinal axis of rotation (A), perpendicular to the longitudinal axis (A), and/or angled relative to the longitudinal axis of rotation (A), such as angled 45° relative to the longitudinal axis of rotation (A).

Sensors 157 may be used to determine a pitch angle of rigid platform 110. For example, sensors 157 may include a multi-axis accelerometer, such as a six-axis accelerometer and gyroscope, that detects the pitch angle of rigid platform 110. Controller 156 may adjust the torque delivered to wheels 101 by electric motors 151 based on a detected pitch angle or pitch rate. For example, a change in pitch or pitch rate may result from a change in center of gravity of a user or other payload supported on rigid platform 110. Alternatively or in addition, pitch or pitch rate may change by a user pushing downwards on the front or rear of rigid platform 110. Controller 156 may generate a control signal to the electric motors 151 to return rigid platform 110 to a neutral orientation parallel to the ground (e.g. a pitch angle of 0°), causing wheels 101 to drive vehicle 100.

Drive system 150 includes a battery 158 to power electric motors 151. Battery 158 may be a high-energy density, rechargeable battery positioned within housing 109 and/or wheel well 140. In an exemplary embodiment, drive system 150 includes first and second batteries that respectively deliver power to first and second electric motors 151, controller 156, and/or other components of vehicle 100, such as lights 104 and speakers 105. In other exemplary embodiments, drive system 100 includes a single battery or pack of batteries 158 that deliver power to both electric motors 151. Batteries 158 may be rechargeable by connection to an appropriate power source, and/or replaceable by accessing the interior of housing 109 and/or wheel well 140 and removing the existing batteries 158 and replacing with new batteries 158.

Batteries 158 may be at least partially accommodated in a recess or cavity formed in rigid platform 110, such as lower deck 112 and/or frame 113. In an exemplary embodiment, batteries 158 are positioned completely below longitudinal axis of rotation (A) and substantially centered along longitudinal axis of rotation (A) so that weight of batteries 157 are evenly balanced to the front and rear of the longitudinal axis of rotation (A). Accordingly, batteries 158 may be positioned between longitudinal axis of rotation (A) and the ground supporting vehicle 100, and substantially aligned with longitudinal axis of rotation (A). Such positioning may provide balanced weight distribution about longitudinal axis of rotation (A) to facilitate stability of rigid platform 110 during operation.

Vehicle 100 may include one or more lights 104 that emit light visible by a user operating vehicle 100 and/or bystanders. Rigid platform 110 includes lights 104 along a front edge and a rear edge. Lights 104 may provide illumination of the surroundings of vehicle 100, particularly during operation of vehicle 100, provide a desired aesthetic appearance including emission of one or more colors, and/or provide an alert to the user or a bystander. In an exemplary embodiment, lights 104 include colored LEDs controlled by controller 156. Power to illuminate LEDs may be delivered automatically by controller 156 when vehicle 100 is in operation, or may be manually actuated by a user input (e.g. by a dedicated input configured to activate lights 104).

Vehicle 100 may include a speaker 105 that outputs audio to a user and/or bystanders. Speaker 105 may be positioned within rigid platform 110 and deliver audio through one or more openings or perforations. In an exemplary embodiment, speaker 105 is positioned in a watertight cavity of rigid platform 110 and sound waves emitted by speaker 105 are transmissible through one or more components of rigid platform 110.

Lights 104 and/or speakers 105 may be configured to alert a user and/or bystander regarding the condition or performance of vehicle 100. For example, the output of lights 104 may change based on operation of vehicle 104. Upon activation of vehicle 100, lights may exhibit a pattern of flashes, color, intensity changes, etc. Similarly, during operation, the output of lights 104 may signal a direction, acceleration, or velocity of vehicle 100. Lights 104 may flash at a high rate during periods of rapid acceleration or velocity, and flash or remain constant during period of low acceleration or velocity. The output of lights 104 on left and right sides of rigid platform 104 may differ to signify vehicle 100 is turning to the left or right. In some exemplary embodiments, the lights may flash according to a predetermined pattern to signal that battery 158 may be low and recharge or replacement may be required soon. Alternatively or in addition, speakers 105 may output audio alerts to a user or bystander to signify a condition of vehicle 100, or to provide instructions to a user regarding operation of vehicle 100. Speakers 105 may output one or more tones, voice alerts, or other alerts to the user.

Vehicle 100 may have one or more variable control settings that may be changed to affect the performance or characteristics of vehicle 100. For example, vehicle 100 may include a variable balancing control setting that affects the sensitivity and/or responsiveness to a change in pitch or pitch rate of rigid platform 110. A relatively higher balancing control setting may increase sensitivity such that a relatively larger torque is delivered to wheels 101 in response to a relatively smaller change in pitch or pitch rate and may provide vehicle 100 with a greater tendency to maintain an upright payload and pitch angle close to neutral. Similarly, a relatively lower balancing control setting may decrease the sensitivity such that a relatively smaller torque is delivered to wheels 101 in response to a relatively smaller change in pitch or pitch rate. Alternatively or in addition, vehicle 100 may include a turning sensitivity setting that affects the sensitivity to variations in deflection of rigid platform 110, or other sensor inputs that are used to determine a direction of vehicle 100. For example, a higher turning sensitivity setting may provide greater responsiveness to differential deflection between left and right portions of rigid platform 110, and may result in a relatively greater difference in torque between first and second wheels 101.

One or more settings of vehicle 100 may be manually variable by a user. For example, vehicle 100 may include an application on a cell phone, tablet, computer, or other device in wireless communication with controller 156. A user may transmit a desired balancing control setting or turning sensitivity setting from the application to controller 156. Alternatively or in addition, vehicle 100 may include one or more vehicle setting inputs 159 such that a user may adjust the vehicle settings by actuation of the vehicle setting inputs 159. In this way, performance characteristics can be customized to a user's ability level or riding style.

In an exemplary embodiment, vehicle 100 may have a training mode in which control settings are provided to promote rapid proficiency in operating vehicle 100. For example, particular control settings may be relatively more or less sensitive so that vehicle 100 is relatively easier to operate in a controlled manner. Vehicle 100 may provide audible training instructions or commands emitted from a speaker 105 of vehicle 100. A user may be provided with real time instructions regarding technique to direct vehicle 100 forwards, backwards, and/or turn left and right. Alternatively or in addition, real-time audio or visual instructions may be delivered to a user via a smartphone, tablet, computer or other device in communication with vehicle 100.

Various control settings of vehicle 100 may be automatically adjusted by controller 156. For example, controller 156 may automatically adjust a balancing control setting or turning sensitivity based on the environmental conditions that vehicle 100 is operating in (e.g. smooth surface vs. rough terrain) or characteristics of a user, such as weight or riding style, detected based on sensor signals from sensors 157. In an exemplary embodiment, control settings of vehicle 100 are automatically adjusted based on a skill level of the user. The control settings of vehicle 100 may be increasingly sensitive based on the duration that a user has operated vehicle 100. Alternatively or in addition, control settings of vehicle 100 may be altered based on measured characteristics of the user's riding style. Controller 156 may automatically adjust one or more control settings to be increasingly sensitive when a user that operates vehicle 100 in a smooth and well-controlled manner, while one or more control settings may be adjusted to be less sensitive when a user operates vehicle 100 in an erratic or uncontrolled manner. For example, the control settings may be gradually adjusted over a period of minutes, hours, days, or weeks of operating vehicle 100 as the user's proficiency develops.

A software application associated with vehicle 100 may allow a user to control various functions of vehicle 100. For example, vehicle 100 may be manually-driven or self-driven based on user input received by the application via a smartphone, tablet, computer, or other device. A user may input a command to drive vehicle 100 in a self-driving mode to direct vehicle 100 in a desired direction or to a particular location. Controller 156 may determine whether a user is present on vehicle 100 based on inputs from one or more sensors 157. If a user is not present, vehicle 100 may respond to the command by driving in the desired direction or to the particular location. In some exemplary embodiments, the application may include a controller that allows a user to provide real-time commands to affect the speed and direction of vehicle 100. If a user is supported on vehicle 100, the manually or self-driving function of vehicle 100 may be disabled by controller 156. In various exemplary embodiments, a user may deliver a command to vehicle 100 to control various functions, including the color and pattern of one or more lights 104, audio output of speaker 105 (e.g. to output music from the device, audio instructions to a user, or other audio output), and other functions of vehicle 100.

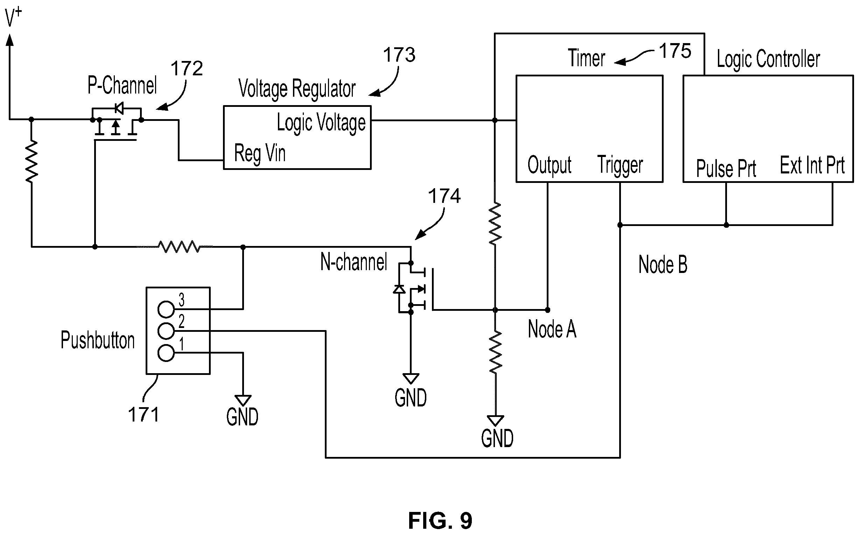

Referring to FIG. 9, an exemplary control circuit 170 is shown that may be included on a printed circuit board of controller 156. Operation of vehicle 100 may be initiated by actuating an on/off button 171. For example, when in an off state, actuation of on/off button 171 may momentarily pass current through a voltage divider circuit, which provides the voltage to the gate of a P-Channel MOSFET 172 to turn on vehicle 100. The P-Channel MOSFET source may be connected to the positive battery terminal and its drain to a switching voltage regulator 173. When the P-Channel MOSFET 172 is turned on, the switching voltage regulator 173 receives power and outputs a logic voltage to the digital system. The logic voltage may be configured to latch an N-Channel MOSFET 174 such that current continues flowing through voltage divider circuit and maintains P-Channel MOSFET 172 in an on state. In an exemplary embodiment, the N-Channel MOSFET 174 has a gate connected to the logic voltage, a drain connected to the lowest level of the voltage divider circuit, and a source connected to ground of the system. The gate of N-Channel MOSFET 174 may be connected, alternatively or in addition, to an output of a single timer integrated circuit 175. When the output of the single timer integrated circuit 175 is low, the gate of the N-Channel MOSFET 174 may also be low such that the N-Channel MOSFET will turn off. When the N-Channel MOSFET turns off, the P-Channel MOSFET 172 will turn off, cutting power to the voltage regulator 173. The single timer integrated circuit 175 may be configured to detect the absence of a pulse to a trigger pin of the single timer integrated circuit 175, such as at node (B), received from logic controller 177 as a momentary digital low signal. If the pulse is not present after a predetermined amount of time, the output of the single timer 175 will go low. The node (B) may be electrically connected to the pulsing logic controller pin and the on/off button 171 such that actuation of on/off button 171 momentarily brings node (B) low.

Alternatively or in addition, node (B) may be connected to a pin of the logic controller that is configured to function as an external interrupt. When the external interrupt pin is brought to digital low, a turn-off routine may be initiated. Power to the digital logic system may be terminated if the turn off routine is commenced outside of the predetermined time when the signal is low from the logic control pulse. Such a configuration facilitates a start-up sequence that allows a user to turn vehicle 100 on by actuation of button 171, and to disconnect the logic system from power when vehicle 100 is turned off by actuation of button 171.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment in part or in whole. Conversely, various features that are described in the context of a single embodiment can also be implemented in multiple embodiments separately or in any suitable subcombination. Moreover, although features may be described herein as acting in certain combinations and/or initially claimed as such, one or more features from a claimed combination can in some cases be excised from the combination, and the claimed combination may be directed to a subcombination or variation of a subcombination. Similarly, while operations may be described in a particular order, this should not be understood as requiring that such operations be performed in the particular order or in sequential order, or that all operations be performed, to achieve desirable results. Particular embodiments of the subject matter have been described. Other embodiments are within the scope of the following claims.

### Embodiments

Although the present invention is defined in the attached claims, it should be understood that the present invention can also (alternatively) be defined in accordance with the following embodiments:
1. A two-wheeled electric vehicle, comprising:
   first and second wheels defining a common longitudinal axis of rotation;
   a rigid platform between the first and second wheels comprising a unitary upper deck that defines a left foot portion and a right foot portion; and
   a carrying handle that spans a center of the rigid platform.
2. The vehicle of embodiment 1, wherein the carrying handle comprises an opening defined through the rigid platform.
3. The vehicle of embodiment 2, wherein a mid-sagittal reference plane divides the rigid deck into left and right halves, and the mid-sagittal reference plane intersects the opening.
4. The vehicle of embodiment 2, wherein the longitudinal axis of rotation intersects the opening.
5. The vehicle of embodiment 2, wherein the carrying handle comprises left and right portions, and the left and right portions are in fixed relation relative to each other.
6. The vehicle of embodiment 2, wherein the carrying handle is defined at least in part by a convex surface extending upwardly from a lower deck.
7. The vehicle of embodiment 6, wherein the convex surface is integrally formed with the lower deck as a unitary component.
8. The vehicle of embodiment 2, wherein the opening has a width (w_{opening}) measured across the opening in a direction perpendicular to the longitudinal axis of rotation, and the rigid platform has a width (W_{platform}) between front and rear edges of the rigid platform, and wherein 0.1*(W_{platform}) < (w_{opening}) < 0.75*(W_{platform}).
9. The vehicle of embodiment 2, wherein the carrying handle comprises first and second grippable portions on opposite sides of the opening and spaced from the longitudinal axis of rotation such that the longitudinal axis of rotation does not intersect the first and second grippable portions.
10. The vehicle of embodiment 3, wherein the carrying handle is free of movable parts.
11. The vehicle of embodiment 1, wherein the upper deck comprises upwardly curved end regions at opposite ends.
12. The vehicle of embodiment 11, wherein the upper deck has an exposed upper surface, and the upper surface is at least partially below the longitudinal axis of rotation.
13. The vehicle of embodiment 1, comprising a first motor configured to deliver torque to the first wheel and a second motor configured to deliver torque to the second wheel, the first and second motors comprising first and second motor shafts coaxial with the longitudinal axis of rotation.
14. The vehicle of embodiment 1, comprising first and second fenders at least partially surrounding the first and second wheels.
15. The vehicle of embodiment 14, wherein the fenders are removably assembled to the rigid platform by frictional engagement and configured to separate upon an impact force to the first or second fender above a predetermined threshold.
16. The vehicle of embodiment 1, comprising a control system and a sensor, the control system configured to deliver a control signal to an electric motor based on a sensor signal received from a sensor on the rigid platform, wherein the sensor comprises a strain gauge.
17. The vehicle of embodiment 16, wherein the strain gauge is intersected by a mid-sagittal reference plane that divides the rigid platform into left and right halves.
18. The vehicle of embodiment 16, wherein the controller is configured to generate a control signal for driving an electric motor that is proportional to a weight supported by the rigid platform.
19. A two-wheeled electric vehicle, comprising:
   first and second wheels defining a common longitudinal axis of rotation;
   a rigid platform between the first and second wheels, the rigid platform comprising a unitary upper deck defining left and right foot portions; and
   a carrying handle that spans a center of the rigid platform, the carrying handle comprising first and second portions on each side of a mid-sagittal reference plane, the mid-sagittal reference plane perpendicular to the longitudinal axis of rotation and dividing the rigid platform into left and right halves;
   wherein the carrying handle comprises an opening extending through the rigid platform, and the left and right portions of the carrying handle are in fixed relation to each other.
20. The vehicle of embodiment 19, wherein the longitudinal axis of rotation intersects the opening.
21. The vehicle of embodiment 19, wherein the rigid platform comprises a lower deck having an exposed major surface opposite the left and right foot portions of the upper deck, the carrying handle defined at least in part by a convex surface extending upwardly from a lower deck.
22. The vehicle of embodiment 21, wherein the convex surface is integrally formed with the lower deck as a unitary component.
23. The vehicle of embodiment 22, wherein the opening has a width (w_{opening}) measured across the opening in a direction perpendicular to the longitudinal axis of rotation, and the rigid platform has a width (W_{platform}) between front and rear edges of the rigid platform, and wherein 0.1*(W_{platform}) < (w_{opening}) < 0.75*(W_{platform}).
24. The vehicle of embodiment 23, wherein the carrying handle comprises first and second grippable portions on opposite sides of the opening and spaced from the longitudinal axis of rotation such that the longitudinal axis of rotation does not intersect the first and second grippable portions.
25. The vehicle of embodiment 24, wherein the carrying handle is free of movable parts.
26. The vehicle of embodiment 19, comprising first and second fenders at least partially surrounding the first and second wheels, wherein the first and second fenders are removably assembled to the rigid platform by frictional engagement and configured to separate upon an impact force above a predetermined threshold.
27. A two-wheeled electric vehicle, comprising:
   a rigid platform having a major upper surface defining first and second foot portions;
   first and second wheels defining a common longitudinal axis of rotation; and
   means for carrying the vehicle in an orientation in which the longitudinal axis of rotation is perpendicular to a force of gravity and the major upper surface is parallel to the force of gravity.
28. A two-wheeled electric vehicle, comprising:
   a rigid platform having a major upper surface defining first and second foot portions;
   first and second wheels defining a common longitudinal axis of rotation; and
   first and second fenders at least partially surrounding the first and second wheels;
   wherein the first and second fenders are frictionally securable with the rigid platform and configured to separate without breaking upon an impact force above a predetermined threshold.

What is claimed is:

## Claims

1. A two-wheeled electric vehicle, comprising:
first and second wheels defining a common longitudinal axis of rotation;
a rigid platform between the first and second wheels comprising a unitary upper deck that defines a left foot portion and a right foot portion; and
a carrying handle that spans a center of the rigid platform.

2. The vehicle of claim 1, wherein the carrying handle comprises an opening defined through the rigid platform.

3. The vehicle of claim 2, wherein a mid-sagittal reference plane divides the rigid deck into left and right halves, and the mid-sagittal reference plane intersects the opening.

4. The vehicle of claim 2, wherein the carrying handle either:
a) comprises left and right portions and the left and right portions are in fixed relation relative to each other; or
b) is defined at least in part by a convex surface extending upwardly from a lower deck.

5. The vehicle of claim 2, wherein the carrying handle comprises first and second grippable portions on opposite sides of the opening and spaced from the longitudinal axis of rotation such that the longitudinal axis of rotation does not intersect the first and second grippable portions.

6. The vehicle of claim 1, wherein the upper deck comprises upwardly curved end regions at opposite ends, and optionally wherein the upper deck has an exposed upper surface, and the upper surface is at least partially below the longitudinal axis of rotation.

7. The vehicle of claim 1, comprising a first motor configured to deliver torque to the first wheel and a second motor configured to deliver torque to the second wheel, the first and second motors comprising first and second motor shafts coaxial with the longitudinal axis of rotation.

8. The vehicle of claim 1, comprising a control system and a sensor, the control system configured to deliver a control signal to an electric motor based on a sensor signal received from a sensor on the rigid platform, wherein the sensor comprises a strain gauge.

9. The vehicle of claim 8, wherein one of a) and b), wherein:
a) the strain gauge is intersected by a mid-sagittal reference plane that divides the rigid platform into left and right halve; and
b) the controller is configured to generate a control signal for driving an electric motor that is proportional to a weight supported by the rigid platform.

10. The two-wheeled electric vehicle of claim 1, wherein:
the carrying handle comprises first and second portions on each side of a mid-sagittal reference plane, the mid-sagittal reference plane perpendicular to the longitudinal axis of rotation and dividing the rigid platform into left and right halves; and
the carrying handle comprises an opening extending through the rigid platform, and the left and right portions of the carrying handle are in fixed relation to each other.

11. The vehicle of claim 2 or 10, wherein the longitudinal axis of rotation intersects the opening.

12. The vehicle of claim 10, wherein the rigid platform comprises a lower deck having an exposed major surface opposite the left and right foot portions of the upper deck, the carrying handle defined at least in part by a convex surface extending upwardly from a lower deck.

13. The vehicle of claim 4 or 12, wherein the convex surface is integrally formed with the lower deck as a unitary component.

14. The vehicle of claim 2 or 13, wherein the opening has a width (w_{opening}) measured across the opening in a direction perpendicular to the longitudinal axis of rotation, and the rigid platform has a width (W_{platform}) between front and rear edges of the rigid platform, and wherein 0.1*(W_{platform}) < (w_{opening}) < 0.75*(W_{platform}).

15. The vehicle of claim 2 or 14, wherein the carrying handle comprises first and second grippable portions on opposite sides of the opening and spaced from the longitudinal axis of rotation such that the longitudinal axis of rotation does not intersect the first and second grippable portions, and optionally wherein the carrying handle is free of movable parts.

16. The vehicle of claim 1 or 10, comprising first and second fenders at least partially surrounding the first and second wheels, wherein the first and second fenders are removably assembled to the rigid platform by frictional engagement and configured to separate upon an impact force above a predetermined threshold.
